# EUROPÄISCHE PATENTSCHRIFT

(11) **EP 0 944 946 B1**
(45) Veröffentlichungstag und Bekanntmachung des Hinweises auf die Patenterteilung: **26.11.2008**
(21) Anmeldenummer: 98955355.7
(22) Anmeldetag: 30.09.1998
(51) Int. Cl.: H02J 7/14

(54) **EINRICHTUNG ZUR ENERGIEVERTEILUNG IN EINEM KRAFTFAHRZEUG**
POWER DISTRIBUTION SYSTEM IN A VEHICLE
SYSTEME DE DISTRIBUTION D'ENERGIE DANS UN VEHICULE

(30) Priorität: 16.10.1997 DE 19745849
(43) Veröffentlichungstag der Anmeldung: 29.09.1999
(73) Patentinhaber: ROBERT BOSCH GMBH, 70442 Stuttgart (DE)
(72) Erfinder: SCHOETTLE, Richard, 75248 Oelbronn (DE); SCHMUCKER, Clemens, D-70806 Kornwestheim (DE); KAISER, Karl-Heinz, D-71732 Tamm (DE)
(86) Internationale Anmeldenummer: PCT/DE1998/002890
(87) Internationale Veröffentlichungsnummer: WO 1999/021261

(56) Entgegenhaltungen:
- EP-A- 0 601 300
- DE-A- 3 729 772
- DE-A- 4 212 819
- DE-A- 4 311 670
- US-A- 4 402 288
- US-A- 4 553 516
- US-A- 5 467 008

## Beschreibung

Die Erfindung geht aus von einer Einrichtung zur Energieverteilung in einem Kraftfahrzeug nach der Gattung des Hauptanspruchs.

### Stand der Technik

Die Versorgung der in einem Kraftfahrzeug vorhandenen elektrischen Verbraucher stellt heute in zunehmendem Maß ein Problem dar, da die Zahl und die Leistungsaufnahme der elektrischen Verbraucher im Fahrzeug ständig anwächst. Gleichzeitig kann die zur Verfügung stehende Energie, die mit Hilfe eines mittels eines Spannungsreglers geregelten Drehstromgenerators erzeugt wird, nicht beliebig gesteigert werden, da sowohl hinsichtlich der Größe des Generators als auch hinsichtlich seiner Auswirkungen auf die ihn antreibende Brennkraftmaschine bestimmte Vorgaben eingehalten werden müssen. Damit eine zuverlässige Energieversorgung der elektrischen Verbraucher ermöglicht wird, werden heute verschiedene.Maßnahmen getroffen, die entweder zu einer Leistungssteigerung der vom Generator abgegebenen elektrischen Energie führen oder die sicherstellen, daß bei einer kritischen Energieversorgung nicht sicherheitsrelevante elektrische Versorger zumindest zeitweise abgeschaltet werden, so daß eine Herabsetzung der bereitzustellenden elektrischen Energie erreicht wird.

Ein Energieversorgungssystem für die elektrischen Verbraucher in einem Kraftfahrzeug, bei dem ein fahrzustandsabhängiges Schalten der elektrischen Verbraucher vorgeschlagen wird, ist aus der EP-0 601 300 B1 bekannt. Bei dem in dieser Druckschrift beschriebenen Fahrzeugbordnetz wird die elektrische Energie in üblicher Weise mit Hilfe eines von der Brennkraftmaschine angetriebenen Drehstromgenerators erzeugt. Zur Einsparung von Kraftstoff wird die Brennkraftmaschine bei Fahrzeugstillstand ausgeschaltet, während dieser Zeit wird demnach vom Generator keine elektrische Energie erzeugt. In verschiedenen Fahrzuständen wird dagegen in üblicher Weise elektrische Energie erzeugt, die zur Ladung der Fahrzeugbatterie und zur Versorgung der elektrischen Verbraucher verwendet wird. Damit unabhängig vom Fahrzustand eine zuverlässige Energieversorgung für die betriebsrelevanten elektrischen Verbraucher erzielt wird, wird mit Hilfe eines Steuergerätes, das mit verschiedenen Sensoren und Schaltern in Verbindung steht und auf elektrische Stellglieder sowie Anzeigevorrichtungen Einfluß nehmen kann, eine Versorgungsstrategie für die elektrische Verbraucher verfolgt, bei der automatische Verbraucherabschaltungen und Zuschaltungen erfolgen, wenn das Steuergerät bestimmte Fahrzustände erkennt. Die Zu- und Abschaltungen sind dabei in ihrer Hierarchie so gewählt, daß zunächst unwesentliche Verbraucher abgeschaltet werden und die betriebserforderlichen bzw. sicherheitsrelevanten Verbraucher überhaupt nicht abgeschaltet werden. Bei bestimmten Fahrzuständen wird die elektrische Energieversorgung aus der Fahrzeugbatterie oder aus einer von der Fahrzeugbatterie entkoppelten Hilfsbatterie erhalten.

Bei der bekannten Energieversorgung in einem Fahrzeugbordnetz werden die Fahrzustände als vorgegeben und unbeeinflußbar angenommen und es wird zur Sicherstellung der ausreichenden Energieversorgung für die elektrischen Verbraucher lediglich darauf abgehoben, Gruppen von elektrischen Verbrauchern entsprechend des erkannten Fahrzustandes zu- oder abzuschalten. Eine Beeinflussung der Brennkraftmaschine abhängig von der benötigten elektrischen Leistung erfolgt jedoch nicht.

Aus der DE 37 29 772 A1 ist bereits eine Generatoranlage bekannt. Sie umfasst einen über einen Zwischenkreis antreibbaren Generator in einem mehrteiligen Bordnetz. Einer Auswerteschaltungsanordnung wird für die Regelung der Spannungsversorgung neben an sich bekannten Größen wenigstens eine der Größen Brennkraftmaschinendrehzahl, Generatordrehzahl, Generatorspannung, Generatorstrom, Bauteiletemperatur des Generators, Batteriespannung, Batteriestrom, Batterietemperatur oder Verbraucherspannung für empfindliche oder für sehr empfindliche Verbraucher als Eingangsgröße zugeführt und in Kennfeldern abgespeichert, die zusammen mit den Eingangsgrößen zur Ermittlung der benötigten Ausgangsgrößen herangezogen werden. Die Ausgangsgrößen wirken auf wenigstens eine der Größen Erregerstrom des Generators, Übersetzung des Zwischentriebs und Regelung der spannungsempfindlichen Bereiche des Bordnetzes. Durch geeignete Dimensionierung der Auswerteschaltungsanordnung können Prioritäten gesetzt werden für Verbrauchsoptimierung, Reduzierung der Generatordrehzahl bei starker Belastung der Brennkraftmaschine, Geräuschminimierung, Optimierung der Bauteiltemperatur bei gleichzeitiger Sicherung der erforderlichen Spannungsversorgung. Die Generatoranlage kann damit an die jeweiligen Erfordernisse angepasst werden.

### Vorteile der Erfindung

Mit der erfindungsgemäßen Einrichtung zur Energieverteilung in einem Kraftfahrzeug wird dagegen in vorteilhafter Weise eine weitere Verbesserung der elektrischen Energieversorgung erzielt. Es wird gleichzeitig sichergestellt, daß die Batterieladebilanz in einem gewünschten Rahmen bleibt. Weiterhin wird ein verbessertes Zusammenspiel von Generator, Batterie, Fahrzeugantrieb bzw. Triebstrang und elektrischen Verbrauchern erhalten. In vorteilhafter Weise werden Spannungsschwankungen im elektrischen Bordnetz reduziert, so daß insbesonders ein Spannungstoleranzbereich erzielbar ist, der auch Anforderungen von besonders empfindlichen Verbrauchern, beispielsweise Steuergeräten genügt. Weiterhin wird in vorteilhafter Weise die Zuverlässigkeit des elektrischen Bordnetzes gesteigert und die Auslegungskriterien von Generator und Batterie werden in vorteilhafter Weise vereinfacht.

Erzielt werden diese Vorteile, indem eine Einrichtung zur Energieverteilung im Kraftfahrzeug so arbeitet, daß sowohl die den Generator antreibende Brennkraftmaschine als auch die elektrischen Verbraucher des Bordnetzes bei der Verteilungsstrategie berücksichtigt werden. Dazu werden in einer Steuereinrichtung die zugeführten Informationen vom Bordnetz und von der Brennkraftmaschine zur Ermittlung von Steuer- und/oder Regelgrößen verarbeitet und diese Größen werden den entsprechenden Komponenten des Bordnetzes oder der Brennkraftmaschine zugeführt. Die Energieverteilung wird dann von der Steuereinrichtung gemäß vorgebbaren Anforderungen durchgeführt, unter Berücksichtigung der Bedingung, daß die Bordnetz-Ist-Spannung innerhalb vorgebbarer Grenzen liegt.

Die erforderlichen Informationen werden in vorteilhafter Weise über geeignete Sensoren oder Zustandserkennungsmittel gewonnen und der Steuereinrichtung zugeführt. Diese wirkt über die ermittelten Ansteuersignale auf verschiedene Komponenten des Bordnetzes oder auf die Brennkraftmaschine selbst ein. In vorteilhafter Weise wird eine Differenzleistung ermittelt, die der Differenz zwischen geforderter Leistung bezogen auf Sollspannung und der realisierten Leistung entspricht. Aus dieser Differenzleistung läßt sich eine Bordnetz-Ist-Spannung ermitteln. Der Bordnetzmanager verändert die geforderte Leistung und/oder die realisierte Leistung so, daß die sich ergebende Bordnetz-Ist-Spannung im Toleranzbereich bleibt.

In besonders vorteilhafter Weise ist die Steuereinrichtung, die die Energieverteilung durchführt, als Bordnetz-Manager ausgestaltet, wobei die Energiemanagement-Struktur aus Spannungsregler, Vorsteuerung und Managementstrategie besteht. Mit dieser Energiemanagement-Struktur kann das Zusammenspiel von Generator, Batterie, Triebstrang und elektrischen Verbrauchern vorgegeben werden, wobei für die Vorgabe spezielle Anforderungen berücksichtigt werden können. Durch die Vorsteuerung ist es möglich, die Bordnetzspannung in einem engen Toleranzband zu halten, da die sich aus der vorausberechneten Differenzleistung ergebende Ist-Spannung durch Maßnahmen des Bordnetzmanagers beeinflußt werden kann (daß sie im Toleranzband bleibt). Abweichungen von der Sollspannung durch den Spannungsregler werden in vorteilhafter Weise ausgeregelt.

Durch Auswahl einer geeigneten Management-Strategie läßt sich die für den jeweiligen Zustand von Fahrzeug, Brennkraftmaschine und Bordnetz eine idealen Kombination von Energieerzeugung, Energieverteilung und Energieverbrauch vorgeben. Es kann insbesonders bei niederem Batterieladezustand die Drehzahl der Brennkraftmaschine angehoben werden, ebenso läßt sich der Generator in einen übererregten Betrieb überführen und/oder es können elektrische Verbraucher leistungsreduziert werden oder nicht unbedingt erforderliche elektrische Verbraucher können bei erkanntem Leistungsdefizit ganz abgeschaltet werden.

Durch Änderung der Bordnetzparameter kann der Triebstrang entlastet werden, falls während der Fahrzeugbeschleunigung die gesamte Leistung zur Beschleunigung verwendet werden soll. Es kann in diesem Fall das den Motor belastende Generatormoment durch Abschaltung starker Verbraucher oder durch völlige oder teilweise Abkopplung des Generators reduziert werden. Solange die Brennkraftmaschine in einem nicht ausgelasteten Zustand betrieben wird, kann das belastende Generatormoment erhöht werden, wobei die Regelung der Brennkraftmaschine die zusätzliche Belastung ausgleichen muß.

Da der Bordnetzmanager alle relevanten Verbraucherleistungen zuteilt, beeinflußt er auch das Ein- bzw. Ausschaltverhalten dieser Verbraucher, dies gilt auch für die zeitliche Dauer. Das Ein- bzw. Ausschaltverhalten und die enge Kopplung mit der Motorsteuerung, beispielsweise eine Momentenanforderung vor Zuschaltung zusätzlicher elektrischer Last, ermöglicht in vorteilhafter Weise den Wegfall der heute teilweise üblichen Load-Response-Funktion, wobei darunter eine verzögerte Generatorstromzunahme nach Zuschaltung von starken Lasten verstanden wird. Die heute üblichen Worst-Case-Anforderungen an den Generator, lassen sich reduzieren, da bei Bedarf die Ladebilanz durch Maßnahmen wie Verbraucherleistungsreduzierung bzw. Drehzahlanhebung und Generatorübererregung in erforderlichem Maße aufrechterhalten werden kann.

Die Steuereinrichtung bzw. der Bordnetz-Manager kann als eigenes Steuergerät ausgebildet sein, das sowohl mit dem Steuergerät der Brennkraftmaschine als auch dem Steuerteil des Spannungsreglers zusammenarbeitet, wobei entsprechende Anschlüsse bzw. Schnittstellen vorhanden sein müssen. Der Bordnetzmanager kann aber auch Bestandteil des Fahrzeugsteuergerätes sein oder in einen intelligenten Spannungsregler integriert sein, wobei jeweils die Verbindung zwischen Brennkraftmaschinensteuergerät und Spannungsregler in geeigneter Weise aufgebaut sein muß. Das Fahrzeugsteuergerät kann auch die gesamten Funktionen des Bordnetzmanagers übernehmen.

### Zeichnung

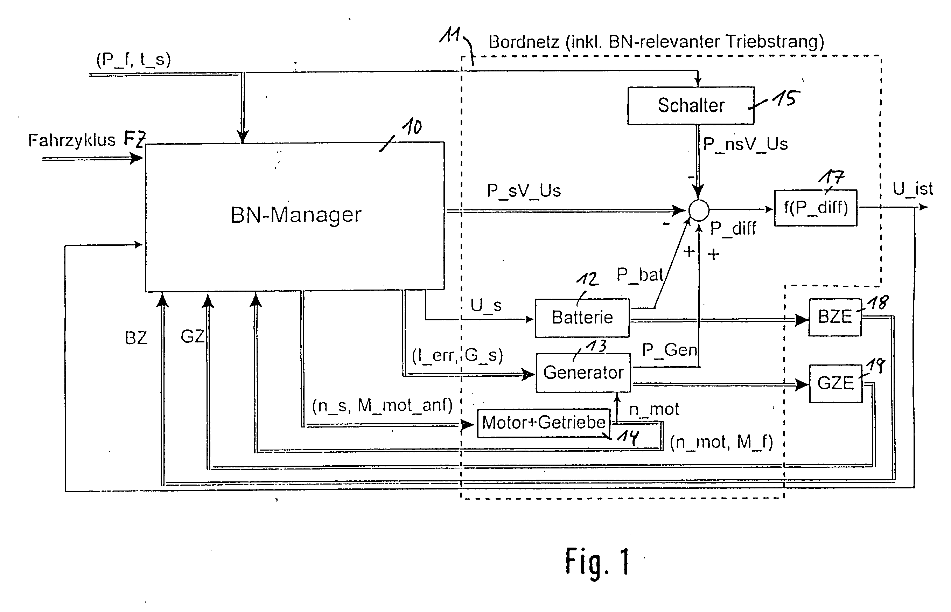

Ausführungsbeispiele der Erfindung sind in den Figuren 1 bis 4 der Zeichnung dargestellt und werden in der nachfolgenden Beschreibung unter Berücksichtigung der in Tabelle 1 aufgeführten Abkürzungen näher erläutert.

**Tabelle 1:**

| Für Figuren 1 bis 3: | |
|---|---|
| BN | Bordnetz |
| BZ | Batteriezustand |
| BZE | Batteriezustandserkennung (Berechnung oder Messung) |
| ΔP_gen | Leistungsänderung, vom Generator zu realisieren |
| ΔP_sV | Leistungsänderung, über Verbrauchermanagement zu realisieren |
| FZ | Angaben über zukünftigen Fahrzyklus |
| G_s | Parametervektor zur Generatorsteuerung, z. B. Ansteuerung Pulswechselrichter |
| GZ | Generatorzustand |
| GZE | Generatorzustandserkennung (Berechnung oder Messung) |
| I_err | Erregerstrom |
| M_f | Momentenforderung von Triebstrang an Bordnetz |
| M_mot_anf | Momentenanforderung von Bordnetz an Triebstrang |
| n_mot | Drehzzahl Verbrennungsmotor |
| n_s | Drehzahlwunsch von Bordnetz an Triebstrang mit dem Ziel, die Generatordrehzahl zu ändern, d. h. auch ändern der Generatorgetriebeübersetzung möglich. |
| P_Bat | Batterieleistung |
| P_diff | Diffferenzleistung=geforderte Leistung bezogen auf Sollspannung- realisierte Leistung |
| P_f | Leistungsforderung |
| P_Gen | Generatorleistung elektrisch |
| P_nsV_Us | Leistung der nicht steuerbaren Verbraucher bezogen auf Sollspannung - realisierbare Leistung |
| P_stell | Reglerausgangsgröße (Stellgröße), Leistungsangabe |
| P_sV_Us | zugeteilte Leistung der steuerbaren Verbraucher bezogen auf Sollspannung |
| Reg_s | Parameter zur Reglersteuerung, z. B. zum Anhalten des Integrators |
| t_s | erlaubte Schaltzeit (Zeit, in der die geforderte |
| | Leistung realisiert sein muß) |
| U_ist | Bordnetzistspannung |
| U_s | Bordnetzsollspannung |

| Für Figur 4 : | |
|---|---|
| U_Bat | Batteriespannung |
| I_Bat | Batteriestrom |
| T_Bat | Batterietemperatur |
| T_F | Fahrtdauer |
| Str | Art der Straße (Autobahn, Landstraße, Stadt) |
| Z_Str | Zustand der Straße (Verkehrsaufkommen,...) |
| Z_Bat | Batteriezustand (sehr kritisch, kritisch, befriedigend, gut) = BZ |
| LZ | Batterieladezustand |
| N_ll:S | Leerlaufsolldrehzahl |
| n_schalt_s | Schaltschwellen der Getriebesteuerung |
| P_ver | verfügbare Verbraucherleistung |
| n_zuk | Vektor des zukünftigen mittleren Drehzahlangebot mit den Komponenten n_kurz: kurzfristiges Drehzahlangebot |
| n_mittel | mittelfristiges Drehzahlangebot |
| n_lang | langfristiges Drehzahlangebot |

### Beschreibung

In Figur 1 ist die Energiemanagement-Struktur, mit der die Energieverteilung zwischen Bordnetz und Brennkraftmaschine bzw. Motor ermöglicht wird, dargestellt. Für die Energieverteilung ist die Steuereinrichtung 10, die auch als Bordnetzmanager bezeichnet ist, zuständig. Diese Steuereinrichtung ist im wesentlichen ein Mikroprozessor mit einer nicht dargestellten zentralen Prozessoreinheit sowie Speicher- und Ein- und Ausgabemitteln, über die Signale zuführbar und ausgebbar sind. Die Steuereinrichtung 10 ermittelt aus den zugeführten Informationen, die beispielsweise von geeigneten Sensoren oder Zustandserkennungseinrichtungen und ähnlichem geliefert werden, Ansteuersignale, die den einzelnen Komponenten zuführbar sind. Bezüglich der Abkürzungen sei auf die Tabelle 1 verwiesen.

Die in Figur 1 dargestellte Ankopplung des durch die Steuereinrichtung 10 gebildeten Bordnetzmanagers an das Bordnetz und den relevanten Triebstrang ist als Blockdarstellung ausgeführt. Vom Bordnetz 11 inklusive dem bordnetzrelevanten Triebstrang ist die Batterie 12, der Generator 13, die Einheit Motor plus Getriebe 14, eine Schaltergruppe 15 sowie ein Summationspunkt 16 und ein Block 17, in dem eine Funktion der später noch zu definierenden Differenzleistung gebildet wird, dargestellt. Zusätzlich zum Bordnetz 11 ist eine Batteriezustandserkennung 18 und eine Generatorzustandserkennung 19 eingetragen. Die Blöcke sind untereinander durch Pfeile verbunden, über die die in der Tabelle 1 näher definierten Größen zugeführt oder abgegeben werden. Die Richtung der Pfeile legt jeweils die Signalrichtung fest.

Der Steuereinrichtung 10 bzw. dem Bordnetz-Manager werden folgende Signale bzw. Informationen zugeführt: Die Leistungsanforderung P_f, die erlaubte Schaltzeit t_s, damit ist die Zeit gemeint, in der die geforderte Leistung realisiert sein muß. Informationen über den Fahrzyklus, die Motordrehzahl n_mot, die Momentenanforderung vom Triebstrang an das Bordnetz M_f, eine Information über den Generatorzustand GZ, die mit Hilfe der im Block 19 dargestellten Generatorzustandserkennung gewonnen wird. Weiterhin wird dem Bordnetzmanager eine Information über den Batteriezustand zugeführt, der in der Batteriezustandserkennung 18 gewonnen wird und schließlich wird noch die für die Regelung der Generatorspannung benötigte Bordnetz-Ist-Spannung U_ist zugeführt. Anhand dieser Größen wie gegebenenfalls weiterer Informationen und/oder anhand von in Speichern der Steuereinrichtung 10 abgelegten Daten oder Kennfelder wird die optimale Energieverteilung berechnet und die dafür erforderlichen Ansteuersignale gebildet. Diese werden von der Steuereinrichtung 10, also vom Bordnetzmanager abgegeben und sind im einzelnen: eine Bordnetz-Soll-Spannung U_s, die der Batterie 12 zugeführt wird, ein vorgebbarer Erregerstrom I_err sowie ein Parametervektor zur Generatorsteuerung, beispielsweise zur Ansteuerung der Pulswechselrichter der zum Generator gehörenden Gleichrichterbrücke G_s, die jeweils dem Generator 13 zugeführt werden. Dem Motor und Getriebe 14 wird ein Drehzahlwunsch vom Bordnetz an den Triebstrang mit dem Ziel, die Generatordrehzahl zu ändern, gegebenenfalls auch durch Beeinflussung der Generatorgetriebeübersetzung n_s zugeführt, weiterhin wird dem Motor und Getriebe 14 eine Momentenanforderung von Bordnetz an Triebstrang M_mot_anf zugeführt. Dem Summationspunkt 16 wird-die zugeteilte Leistung der steuerbaren Verbraucher bezogen auf die Sollspannung P_sV_Us zugeführt. Aus dieser Leistung sowie weiterer zuführbarer Leistungen wird die Differenzleistung P_diff gebildet, die die geforderte Leistung bezogen auf die Sollspannung minus der realisierbaren Leistung ist.

Zur Ermittlung der theoretischen Differenzleistung im Bordnetzmanager wird das Bordnetz modellhaft nachgebildet. Die Vorgehensweise wird hier am realen Bordnetz (Figur 1 ) beschrieben. Dem Summationspunkt 16 wird die real gelieferte Generatorleistung P_Gen, die von der Batterie real gelieferte Leistung P_Bat sowie die geforderte Leistung der steuerbaren Verbraucher bei Sollspannung P_sV_Us und die geforderte Leistung der nicht steuerbaren Verbraucher bei Sollspannung P_nsV_Us zugeführt.

Im Bordnetz besteht immer ein Leistungsgleichgewicht, das heißt erzeugte Leistung ist gleich verbrauchter Leistung. Sowohl erzeugte, aber insbesondere die verbrauchte Leistung hängen von der Ist-Spannung ab.

Besteht eine Differenz zwischen gelieferter und geforderter Leistung bei Sollspannung, wird sich die Bordnetz-Ist-Spannung so einstellen, daß die Verbraucherleistung bei Ist-Spannung gleich der erzeugten Leistung ist. Dies wird durch die Funktion in Block 17 dargestellt.

Im Bordnetzmanager wird diese Spannungsänderung vorausberechnet, bevor Änderungen am Bordnetzzustand eingeleitet, zum Beispiel Verbraucher geschaltet werden. Ergibt die Vorausberechnung, daß die Bordnetz-Ist-Spannung nach Realisierung der Änderungen im Bordnetz außerhalb des Toleranzbereichs liegt, ergreift der Bordnetzmanager Maßnahmen, um dies zu verhindern.

Zwischen Motor und Getriebe 14 sowie Generator 13 ist ein weiterer Pfeil eingetragen, der symbolisiert, daß die Motor- bzw. Brennkraftmaschinendrehzahl n_mot für den Betrieb des Generators 13 wesentlich ist. Der Generator 13 wird bekanntermaßen vom Motor 14 gegebenenfalls über ein Getriebe angetrieben. Die erreichbare Generatordrehzahl ist somit mit der Motordrehzahl, gegebenenfalls unter Berücksichtigung eines möglicherweise vorhandenen Getriebes korreliert. Durch Beeinflussung des Getriebes läßt sich die Abhängigkeit der Generatordrehzahl von der Motordrehzahl beeinflussen.

Anhand der in Figur 1 aufgeführten Größen und Zusammenhänge wird das erfindungsgemäße Energiemanagement mit Hilfe des in der Steuereinrichtung 10 enthaltenen Bordnetzmanagers realisiert. Der Bordnetzmanager betreibt dabei den Generator 13, die Batterie 12, den Triebstrang, insbesonders Motor und Getriebe 14 sowie die Verbraucher des Fahrzeuges, die in Figur 1 nicht näher dargestellt sind so, daß im Mittel eine ausgeglichene Ladebilanz im Bordnetz sichergestellt wird und die Spannungslage in einem spezifizierten Bereich bzw. Band gehalten wird.

Der Bordnetzmanager entscheidet aufgrund des Batteriezustandes, des Generatorzustandes, des Triebstrangzustandes, der Bordnetzspannung bzw. Batteriespannung sowie der geforderten elektrischen Leistung über eine geeignete Strategie zur Leistungserzeugung bzw. Leistungsverteilung. Dabei wird zusätzlich noch unterschieden zwischen steuerbaren und nichsteuerbaren elektrischen Verbrauchern, wobei letztere eine elektrische Last bilden, die nicht beeinflußbar ist. Zu diesen Verbrauchern gehören Verbraucher, die unter keinen Umständen abgeschaltet werden dürfen, da sie für eine ordnungsgemäße Funktionsfähigkeit der Gesamtanordnung zwingend erforderlich sind.

Den steuerbaren elektrischen Verbrauchern teilt der Bordnetzmanager die jeweils zur Verfügung stehende elektrische Leistung zu. Diese Zuteilung umfaßt Einschaltverhalten und Ausschaltverhalten sowie Einschalt- bzw. Ausschaltzeitpunkt. Weiterhin gibt der Bordnetzmanager die relevanten Größen für die Generatorsteuerung vor.

Beispielsweise wird der Erregerstrom, der der Erregerwicklung des Generators zugeführt wird, vom Bordnetzmanager eingestellt, wobei jeweils die herrschenden Bedingungen berücksichtigt werden. Der Bordnetzmanager berechnet eine optimale Bordnetz-Soll-Spannung und vergleicht sie mit der Ist-Spannung und kann über geeignete Verbindungen Einfluß nehmen auf Parameter, die die Generatordrehzahl bestimmen.

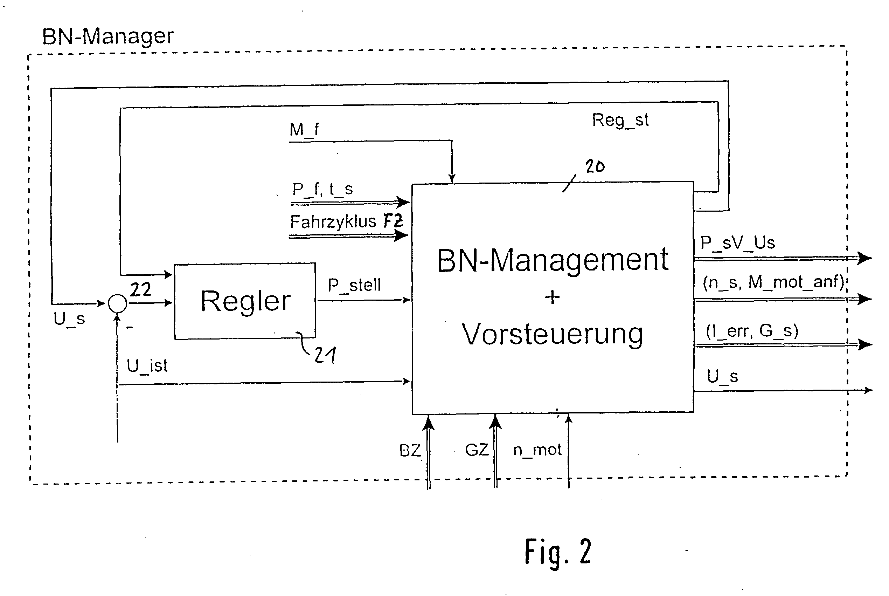

Figur 2 zeigt die wesentlichen Teile des Bordnetzmanagers ausführlicher. Dabei ist die Steuereinrichtung als Bordnetz-Management plus Vorsteuerung bezeichnet. Dem Bordnetz-Management plus Vorsteuerung werden folgende Eingangsgrößen zugeführt: die Momentenanforderung von Triebstrang und Bordnetz M_f, die Leistungsanforderung P_f, die erlaubte Schaltzeit, also die Zeit, in der die geforderte Leistung realisiert sein muß, t_s, Informationen über den zukünftigen Fahrzyklus, FZ, eine vom Regler 21 gelieferte Stellgröße, die als Reglerausgangsgröße P_stell eine Leistungsangabe beinhaltet. Weiterhin wird die Bordnetz-Ist-Spannung U_ist zugeführt, Informationen über den Batteriezustand BZ, den Generatorzustand GZ, sowie die Drehzahl des Verbrennungsmotors bzw. der Brennkraftmaschine n_mot.

Aus diesen sowie gegebenenfalls weiteren Größen ermittelt das Bordnetz-Management plus Vorsteuerung die für das Energiemanagement bzw. die Energieverteilung erforderlichen Ansteuergrößen und gibt sie über Verbindungen an die entsprechenden Komponenten des Bordnetzes bzw. den Motor selbst ab.

Die vom Bordnetz-Management plus Vorsteuerung abgegebenen Ausgangsgrößen sind: die zugeteilte Leistung der steuerbaren Verbraucher bezogen auf Sollspannung P_sV_Us, Drehzahlwunsch von Bordnetz an Triebstrang mit dem Ziel, die Generatordrehzahl zu ändern, gegebenenfalls auch durch Änderung der Generatorgetriebeübersetzung n_s, Momentenanforderung von Bordnetzantriebsstrang M_mot_anf, Erregerstrom I_err, Parametervektor zur Generatorsteuerung, beispielsweise zur Ansteuerung der Pulswechselrichter G_s, Bordnetz-Soll-Spannung U_s. Weiterhin wird dem Regler 21 die Ausgangsgröße Parameter zur Reglersteuerung, beispielsweise zum Anhalten des im Regler integrierten Integrators Reg_s zugeführt. Die Bordnetz-Soll-Spannung U_s wird einem mit dem Eingang des Reglers 21 in Verbindung stehenden Summationspunkt 22 zugeführt und dort mit der Bordnetz-Ist-Spannung U_ist überlagert, zur Bildung einer spannungsabhängigen Eingangsgröße für den Regler 21.

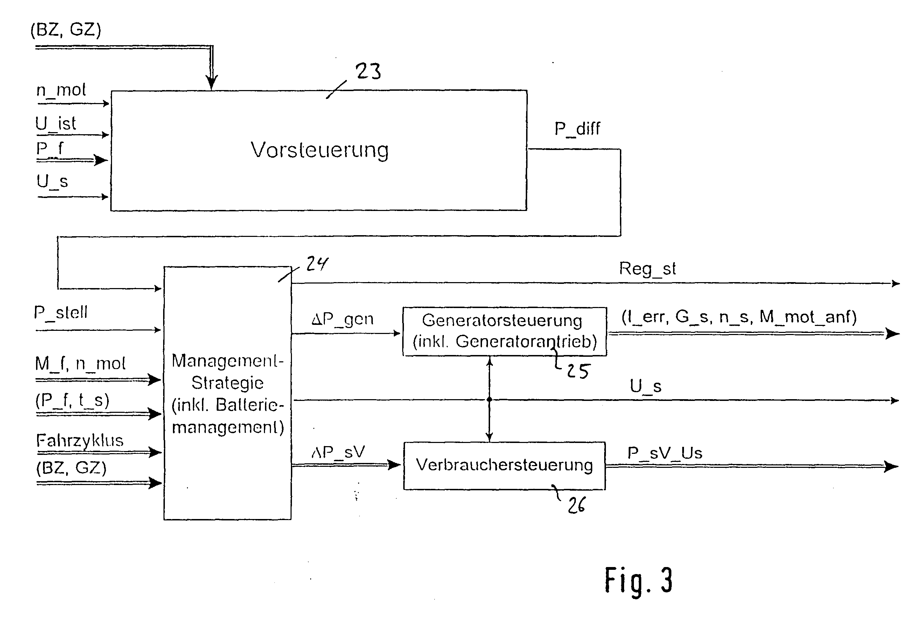

Die Bestimmung der Ausgangsgrößen des Bordnetzmanagers wird anhand der in Figur 3 dargestellten Zusammenhänge erläutert. Im Blockschaltbild nach Figur 3 bezeichnet ein erster Block 23 die Vorsteuerung, der Informationen bezüglich des Batteriezustandes und des Generatorzustandes zugeführt werden. Weiterhin werden der Vorsteuerung 23 die Motordrehzahl n_mot, die Bordnetz-Ist-Spannung U_ist, die Leistungsanforderung P_f und die Bordnetz-Soll-Spannung U_s zugeführt. Diese Größen werden mit Hilfe geeigneter Erfassungsmittel gemessen bzw. ermittelt. Sie dienen der Vorsteuerung 23 zur Bildung der Differenzleistung P_diff, die der Differenz zwischen geforderter Leistung bezogen auf Sollspannung und realisierter Leistung entspricht.

Die in der Vorsteuerung ermittelte Differenzleistung wird dem Block 24, der Managementstrategie inklusive eines Batteriemanagements als erste Eingangsgröße zugeführt. Weitere Eingangsgrößen des Blocks 24 der Managementstrategie sind: die Ausgangsgröße des Reglers (Block 21) P_stell, die Momentenanforderung von Triebstrang an Bordnetz M_f, die Motordrehzahl n_mot, die Leistungsanforderung P_f, die erlaubte Schaltzeit t_s, also die Zeit, in der die geforderte Leistung P_f realisiert sein muß. Dem Block 24 der Managementstrategie werden weiterhin Informationen über den zukünftigen Fahrzyklus FZ zugeführt und ebenso die Informationen bezüglich Batteriezustand und Generatorzustand.

In Abhängigkeit von den zugeführten Informationen sowie in Abhängigkeit von der in der Vorsteuerung 23 ermittelten Differenzleistung werden im Block 24, der Managementstrategie Ansteuersignale für den Spannungsregler Reg_s abgegeben. Diese Signale stellen Parameter zur Reglersteuerung dar, beispielsweise zum Anhalten des im Spannungsregler integrierten Integrators.

Als weitere Ausgangsgrößen der Managementstrategie 24 wird die Leistungsänderung, die vom Generator zu realisieren ist, ΔP_gen dem Block 25, der die Generatorsteuerung inklusive des Generatorantriebes bezeichnet, zugeführt. In diesem Block 25 werden für den Generator wesentliche Größen ermittelt. Beispielsweise sind diese Größen der Erregerstrom I_err, ein Parametervektor zur Generatorsteuerung G_s, der beispielsweise zur Ansteuerung der Pulswechselrichter des Generators verwendet wird. Weiterhin wird der Drehzahlwunsch von Bordnetz an Triebstrang n_s mit dem Ziel, die Generatordrehzahl zu ändern, abgegeben, wobei in diesem Signal auch eine Änderung der Generatorgetriebeübersetzung enthalten sein kann. Schließlich wird noch die Momentenanforderung vom Bordnetz an den Triebstrang M_mot_anf abgegeben. In einem weiteren Block 26 wird die Verbrauchersteuerung durchgeführt. Dazu wird im Block 26 von der Managementstrategie 24 die Leistungsänderung, die über das Verbrauchermanagement zu realisieren ist ΔP_sV, mitgeteilt. Die Bordnetzsollspannung U_s wird von der Managementstrategie 24 einerseits der Generatorsteuerung 25 und andererseits der Verbrauchersteuerung 26 zugeführt und steht für weitere Auswerteeinrichtungen als eigenes Signal zur Verfügung.

Abhängig von der Bordnetz-Soll-Spannung U_s und der Leistungsänderung, die über das Verbrauchermanagement zu realisieren ist ΔP_sV ermittelt die Verbrauchersteuerung die zugeteilte Leistung der steuerbaren Verbraucher bezogen auf Sollspannung P_sV_Us. In Abhängigkeit von dieser zugeteilten Leistung werden die steuerbaren Verbraucher vom Bordnetzmanagement zu- oder abgeschaltet.

Wie in den Figuren 2 und 3 dargestellt ist, besteht der Bordnetzmanager aus zwei Hauptblöcken, dem Regler 21 und dem Block Bordnetzmanagement und Vorsteuerung 20. Die Vorsteuerung berechnet aus realisierter elektrischer Leistung und geforderter zukünftiger Leistung die einzustellende Leistungsdifferenz. Es wird also berechnet: P_diff = P_gef - P_real. Die auftretende Differenz muß durch Maßnahmen des Bordnetzmanagers bis zur Zuteilung der geforderten Leistung ausgeglichen werden, um einen Spannungseinbruch im Bordnetz zu vermeiden bzw. zu minimieren. Es muß sichergestellt sein, daß das spezifizierte Spannungstoleranzband nicht verlassen wird. Mögliche Maßnahmen zur Leistungsanpassung sind beispielsweise Eingriffe in die Generatorerregung oder Änderung der Leistungszuteilung für bestimmte Verbraucher. Diese Maßnahmen müssen eingeleitet werden, falls der Bordnetzmanager feststellt, daß die gewünschte Energieverteilung problematisch wird.

Spannungsabweichungen von der Sollspannung durch nicht exakte Schätzung der zukünftig realisierbaren Leistung gleicht der Spannungsregler aus. Seine Stellgröße, die Leistungsänderung ist eine Eingangsgröße der Managementstrategie, die entscheidet wie die Leistungsänderung zu realisieren ist.

Im Rahmen der Managementstrategie wird zusätzlich die Bordnetz-Soll-Spannung bestimmt, die im wesentlichen von der gewünschten Batteriespannung festgelegt wird. Durch das Zusammenspielen der Energiemanagment-Struktur, die den Regler sowie die Vorsteuerung und Managementstrategie umfaßt, läßt sich das Zusammenspiel von Generator, Batterie, Triebstrang und elektrischen Verbrauchern an vorgebbare gewünschte Abläufe anpassen. Durch die Vorsteuerung, der stets auch die Istspannung zugeführt wird, ist es möglich, die Bordnetzspannung in einem engen Toleranzband zu halten. Abweichungen von der Sollspannung werden durch den Regler 21 ausgeregelt.

Durch eine geeignete Managementstrategie läßt sich die für den jeweiligen Zustand ideale Kombination von Energieerzeugung, Energieverteilung und Energieverbrauch vorgeben. Als geeignete Maßnahmen sind beispielsweise die Anhebung der Motordrehzahl, insbesonders der Leerlaufdrehzahl bei niedrigem Batterieladezustand oder die Übererregung des Generators bei Bedingungen, die nicht zu starken Belastungen, beispielsweise thermischer Art führen. Auch ist eine Abschaltung von unkritischen Verbrauchern bei Verschlechterung des Batterieladezustandes möglich. In ähnlicher Weise kann während der Fahrzeugbeschleunigung durch Abkoppeln des Generators oder durch Abschalten von Verbrauchern das den Motor belastende Generatormoment reduziert werden. Nach welcher Strategie die Energieverteilung durchgeführt wird, ist vorgebbar und wird vom Bordnetzmanager berücksichtigt.

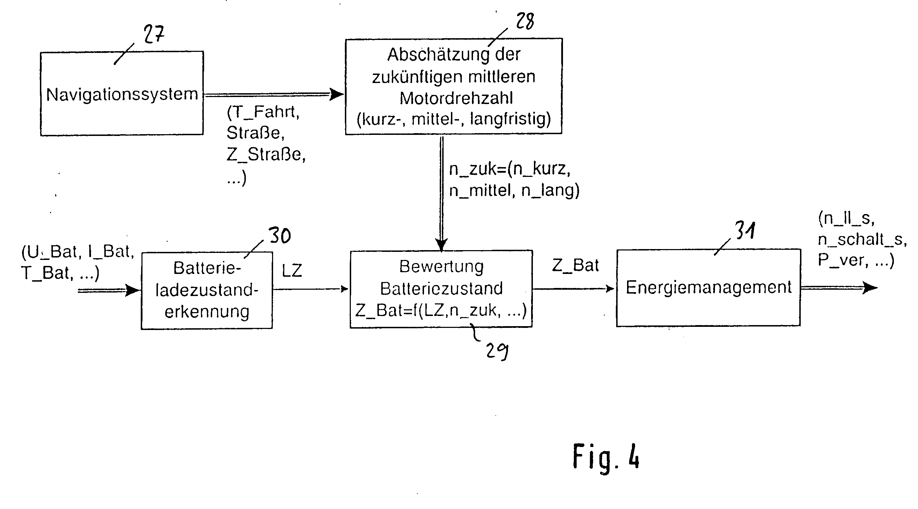

Eine Möglichkeit zur Erweiterung des bisher beschriebenen Energiemanagements soll im folgenden anhand der Figur 4 beschrieben werden. In Figur 4 ist eine Ausführungsform dargestellt, bei der bei der Ermittlung des zu erwartenden Fahrzyklus FZ ein in vielen Fahrzeugen ohnehin vorhandenes Navigationssystem mitberücksichtigt wird. Dieses Navigationssystem liefert eine Vielzahl von Informationen, die bei der Abschätzung der zu erwartenden zukünftigen Motordrehzahl mitberücksichtigt werden können.

In Figur 4 ist das Navigationssystem mit 27 bezeichnet. Es liefert Informationen T_F über die Fahrtdauer, Str über die Art der Straße (Autobahn, Landstraße, Stadt), die in nächster Zeit zu erwarten ist, sowie Informationen Z_Str über den Zustand der Straße unter Berücksichtigung des zu erwartenden Verkehrsaufkommens. Die Informationen, die dem Navigationssystem zur Verfügung stehen, werden im Block 28 zur Abschätzung der zukünftigen mittleren Motordrehzahl verwendet. Dabei läßt sich die kurzfristige, mittelfristige oder langfristige zu erwartende Drehzahl bestimmen. Im Block 28 zur Abschätzung der zukünftigen mittleren Motordrehzahl wird ein Vektor n_zuk gebildet, der als Vektor des zukünftigen mittleren Drehzahlangebots dient und die Komponenten n_kurz aufweist. Bei diesen Komponenten handelt es sich um das kurzfristig zu erwartende Drehzahlangebot. Ein gleichartiger Vektor kann für das mittelfristige Drehzahlangebot n_mittel und das langfristige Drehzahlangebot n_lang gebildet werden. Die so gebildeten Vektoren werden in Block 29 bei der Bewertung des Batteriezustandes mitberücksichtigt. Zur optimalen Bewertung des Batterieladezustandes wird im Block 29 noch eine Information über den Batterieladezustand LZ zugeführt, die in der Batterieladezustandserkennung 30 ermittelt wird. Die Batterieladezustandserkennung 30 wertet dabei beispielsweise die Batteriespannung U_Bat, den Batteriestrom I_Bat, die Batterietemperatur T_Bat und gegebenenfalls weitere Größen aus.

Bei der Bewertung des Batteriezustands in Block 29 wird ein Batteriezustand Z_Bat als Funktion vom Batterieladezustand, von der zukünftig zu erwartenden Drehzahl und gegebenenfalls von weiteren zu erwartenden Größen bestimmt. Der Batteriezustand Z_Bat wird dem Energiemanagement 31 zugeführt. Als Batteriezustand Z_Bat können beispielsweise vier Zustände (sehr kritisch, kritisch, befriedigend, gut) definiert werden. Abhängig von diesen Zuständen regelt das Energiemanagement 31 die gesamte Energieverteilung des Fahrzeuges und des Bordnetzes. Dazu gibt das Energiemanagement 31 Ansteuersignale an entsprechende Komponenten ab, beispielsweise eine Leerlauf-Soll-Drehzahl n_ll_s, Schaltschwellen der Getriebesteuerung n_schalt_s, verfügbare Verbraucherleistung P_ver usw.

Die Berücksichtigung der aus Daten des Navigationssystems erhaltenen Informationen hinsichtlich einer Abschätzung der zukünftigen mittleren Motordrehzahl erlaubt es, beim Energiemanagement die zu erwartende Drehzahl zu berücksichtigen. Damit kann gegebenenfalls auf eine Anhebung der Motordrehzahl bei schlechtem Ladezustand zunächst noch verzichtet werden, falls die Abschätzung der zukünftigen Motordrehzahl ergibt, daß beispielsweise in Folge einer Autobahnfahrt, ein erhöhtes Drehzahlangebot zu erwarten ist. Mit einer solchen Vorgehensweise lassen sich unnötige Drehzahlerhöhungen vermeiden und somit unnötiger Kraftstoffverbrauch verringern. Bei der Einschätzung des Batteriezustandes läßt sich der aktuelle Ladezustand immer in Verbindung mit dem zukünftigen Drehzahlangebot bewerten und es können entsprechende Maßnahmen eingeleitet werden. Ein schlechter Ladezustand mit zukünftiger zu erwartender Staufahrt ist dabei kritischer zu bewerten als der gleiche Ladezustand mit anschließender Autobahnfahrt mit hohem Drehzahlangebot. Sind keine Angabe über den zukünftigen Fahrzyklus bekannt, muß vom Worst-Case ausgegangen werden und Maßnahmen zur Verbesserung des Batterieladezustandes einzuleiten, sobald eine festgelegte Ladezustandsschwelle unterschritten ist. Es müssen dann die bereits erwähnten Maßnahmen Abschalten elektrischer Verbraucher, Anhebung der Leerlaufdrehzahl, Eingriff in Getriebesteuerung zur Anhebung des Drehzahlniveaus usw. eingeleitet werden. Diese Maßnahmen führen zu höherem Kraftstoffbedarf bzw. zu einem Funktionalitätsverlust. Sie können bei Auswertung der vom Navigationssystem gelieferten Informationen vermieden werden.

## Patentansprüche

1. Einrichtung zur Energieverteilung in einem Kraftfahrzeug,
das einen von einer Brennkraftmaschine angetrieben Generator umfasst,
der ein Bordnetz mit wenigstens einer Batterie und einer Anzahl von Verbrauchern versorgt
wobei die Einrichtung eine Steuereinrichtung umfasst,
der erforderliche Informationen vom Bordnetz und der Brennkraftmaschine 24 geführt werden,
zur Ermittlung der Steuer- und/oder Regelgrößen für entsprechende Komponenten des Bordnetzes oder der Brennkraftmaschine, wobei die Steuereinrichtung (10, 20, 24) ein Energiemanagement durchführt, das eine Energieverteilung zwischen Bordnetz und Brennkraftmaschine gemäß vorgebbaren Anforderungen bewirkt, unter Berücksichtigung der Bedingung, daß die Bordnetz-Soll-Spannung (U_s) innerhalb vorgebbarer Grenzen liegt, **dadurch gekennzeichnet, daß** die Ermittlung des zu erwartenden Fahrzyklus (FZ) anhand eines im Fahrzeug vorhandenen Navigationssystem (27) erfolgt, das Informationen über die Fahrtdauer und/oder die Art der Straße und/oder den Zustand der Straße liefert, wobei in einem Block (28) anhand der vom Navigationssystem gelieferten Informationen eine Abschätzung der zukünftigen mittleren Motordrehzahl erfolgt.

2. Einrichtung zur Energieverteilung nach Anspruch 1,
**dadurch gekennzeichnet, daß** die Steuereinrichtung als Mikroprozessor aufgebaut ist und entweder als eigene Einheit vorhanden ist oder im Steuergerät der Brennkraftmaschine oder im Spannungsregler integriert ist.

3. Einrichtung zur Energieverteilung nach Anspruch 1 oder 2,
**dadurch gekennzeichnet, daß** die Steuereinrichtung einen Bordnetzmanager und Mittel zur Vorsteuerung umfaßt und aus den zugeführten Informationen anhand vorgebbarer Energieverteilungsstrategien wenigstens eine Sollspannung (U_s) ermittelt, die mit der ermittelten Istspannung (U_ist) verglichen wird, wobei der Regler eine Leistungsstellgröße (P_stell) bildet, die bei der Generatorregelung berücksichtigt wird.

4. Einrichtung zur Energieverteilung nach einem der vorhergehenden Ansprüche, **dadurch gekennzeichnet, daß** eine Batteriezustandserkennung (18) und eine Generatorzustandserkennung vorhanden ist, die jeweils mit dem Bordnetzmanager in Verbindung stehen.

5. Einrichtung zur Energieverteilung nach einem der vorhergehenden Ansprüche, **dadurch gekennzeichnet, daß** die folgenden Informationen oder eine vorgebbare Anzahl der folgenden Informationen zur Ermittlung der optimalen Energieverteilung vom Bordnetzmanager ausgewertet werden: Leistungsforderung (P_f)
erlaubte Schaltzeit, in der die geforderte Leistung realisiert sein muß (t_s)
Batteriezustand (BZ)
Generatorzustand (GZ)
Bordnetz-Ist-Spannung (U_ist)
Momentenforderung von Triebstrang an Bordnetz (M_f)
Fahrzyklus (FZ)
Reglerausgangsgröße (Stellgröße), als Leistungsangabe (P_stell)
Motordrehzahl (n_mot).

6. Einrichtung zur Energieverteilung nach einem der vorhergehenden Ansprüche, **dadurch gekennzeichnet, daß** die Steuereinrichtung bzw. der Bordnetzmanager die folgenden oder einige der folgenden Ausgangssignale erzeugt:
Leistung der nicht steuerbaren Verbraucher bezogen auf Sollspannung (P_nsv_Us),
Drehzahlwunsch von Bordnetz an Triebstrang mit dem Ziel, die Generatordrehzahl zu ändern, auch unter Berücksichtigung der Generatorgetriebeübersetzung (n_s),
Momentenanforderung von Bordnetz an Triebstrang (M_mot_anf), Erregerstrom (I_err)
Parametervektor zur Generatorsteuerung, insbesonders zur Ansteuerung der Pulswechselrichter der Gleichrichterbrücke (G_s),
Bordnetz-Soll-Spannung (U_s).

7. Einrichtung zur Energieverteilung nach einem der vorhergehenden Ansprüche, **dadurch gekennzeichnet, daß** das Bordnetzmanagement (24), in dem die Managementstrategie festgelegt wird und die Vorsteuerung (23) und der Regler (21) als getrennte Einheiten ausgebildet sind.

8. Einrichtung zur Energieverteilung nach einem der vorhergehenden Ansprüche, **dadurch gekennzeichnet, daß** das Bordnetzmanagement (24) der Generatorsteuerung (25) Ansteuersignale zuführt, die eine vom Generator zu realisierende Leistungsänderung bewirkt und einer Verbrauchersteuerung (26) Signale übermittelt, die eine Leistungsänderung über ein Verbrauchermanagement bewirken, wobei sowohl die Generatorsteuerung (25) als auch die Verbrauchersteuerung (26) ihrerseits Ansteuersignale abgibt.

9. Einrichtung zur Energieverteilung nach Ansprüch 1, **dadurch gekennzeichnet, daß** bei der Bewertung des Batterieladezustandes die Abschätzung der zukünftigen Motordrehzahl mitberücksichtigt wird, wobei anhand der Bewertung des Batteriezustandes Eingriffe auf das Energiemanagement erfolgen.

## Claims

1. Device for distributing power in a motor vehicle which comprises a generator which is driven by an internal combustion engine and supplies power to an on-board electrical system having at least one battery and a number of loads, with the device comprising a control device, which is supplied with required information by the on-board electrical system and the internal combustion engine, for determining the control and/or regulating variables for corresponding components of the on-board electrical system or the internal combustion engine, with the control device (10, 20, 24) carrying out a power management operation which distributes power between the on-board electrical system and the internal combustion engine according to predefinable requirements, taking into account the condition that the on-board electrical system setpoint voltage (U_s) is within predefinable limits, **characterized in that** the drive cycle (FZ) to be expected is determined on the basis of a navigation system (27) which is present in the vehicle and provides information about the journey duration and/or the type of road and/or the state of the road, with the future average engine rotation speed being estimated in a block (28) on the basis of the information provided by the navigation system.

2. Device for distributing power according to Claim 1, **characterized in that** the control device is designed as a microprocessor and is present either as a dedicated unit or is integrated in the controller of the internal combustion engine or in the voltage regulator.

3. Device for distributing power according to Claim 1 or 2, **characterized in that** the control device comprises an on-board electrical system manager and means for pilot control, and at least one setpoint voltage (U_s), which is compared with the determined actual voltage (U_act), is determined from the supplied information on the basis of predefinable power distribution strategies, with the regulator forming a power actuating variable (P_actuating) which is taken into account during generator regulation.

4. Device for distributing power according to one of the preceding claims, **characterized in that** a battery state identification means (18) and a generator state identification means are present, these in each case being connected to the on-board electrical system manager.

5. Device for distributing power according to one of the preceding claims, **characterized in that** the following items of information or a predefinable number of the following items of information are evaluated by the on-board electrical system manager in order to determine the optimum power distribution:
power requirement (P_f),
permitted switching time within which the required power has to be realized (t_s),
battery state (BZ),
generator state (GZ),
on-board electrical system actual voltage (U_act), torque requirement of the drive train on the on-board electrical system (M_f),
drive cycle (FZ),
regulator output variable (actuating variable), as power statement (P_actuating),
engine rotation speed (n_eng).

6. Device for distributing power according to one of the preceding claims, **characterized in that** the control device or the on-board electrical system manager generates the following or some of the following output signals:
power of the uncontrollable loads in relation to the setpoint voltage (P_nsv_Us),
rotation speed desired by the on-board electrical system from the drive train with the aim of changing the generator rotation speed, also taking into account the generator gear mechanism transmission ratio (n_s),
torque requirement of the on-board electrical system on the drive train (M_eng_req),
field current (I_field)
parameter vector for the generator control means, in particular for driving the pulse-controlled inverter of the rectifier bridge (G_s),
on-board electrical system setpoint voltage (U_s).

7. Device for distributing power according to one of the preceding claims, **characterized in that** the on-board electrical system management system (24), in which the management strategy is defined, and the pilot control system (23) and the regulator (21) are formed as separate units.

8. Device for distributing power according to one of the preceding claims, **characterized in that** the on-board electrical system management system (24) supplies actuating signals to the generator control means (25), which signals effect a change in power which is to be realized by the generator, and transmits signals to a load control means (26), which signals effect a change in power via a load management system, with both the generator control means (25) and the load control means (26) for their part outputting actuating signals.

9. Device for distributing power according to Claim 1, **characterized in that** the estimation of the future engine rotation speed is also taken into account when assessing the battery charge state, with interventions being made in the energy management system on the basis of the assessment of the battery state.

## Revendications

1. Installation pour répartir l'énergie dans un véhicule automobile comportant un générateur entraîné par un moteur à combustion interne alimentant un réseau embarqué avec au moins une batterie et un certain nombre d'utilisateurs, l'installation comportant une installation de commande recevant les informations nécessaires en provenance du réseau embarqué et du moteur à combustion interne pour déterminer les grandeurs de commande et/ou de régulation des composants correspondants du réseau embarqué ou du moteur à combustion interne,
l'installation de commande (10, 20, 24) effectue une gestion de l'énergie assurant une distribution de l'énergie entre le réseau embarqué et le moteur à combustion interne selon des exigences prédéfinies en tenant compte de la condition demandant que la tension de consigne du réseau embarqué (U_s) se place dans des limites prédéfinies,
**caractérisée en ce que**
la détermination du cycle de roulage (FZ), prévisible se fait à l'aide d'un système de navigation (27) équipant le véhicule, qui fournit des informations concernant la durée du trajet et/ou la nature de la chaussée et/ou l'état de la chaussée, et dans un bloc (28), à l'aide des informations fournies par le système de navigation, on évalue la vitesse de rotation moyenne, future, du moteur.

2. Installation de répartition de l'énergie selon la revendication 1,
**caractérisée en ce que**
l'installation de commande est constituée par un microprocesseur et se présente soit comme une unité propre, soit comme intégrée dans l'appareil de commande du moteur à combustion interne ou dans le régulateur de tension.

3. Installation de répartition de l'énergie selon la revendication 1 ou 2,
**caractérisée en ce que**
l'installation de commande comprend un gestionnaire de réseau embarqué et des moyens de commande préalable et à partir des informations fournies et à l'aide de stratégies de distribution d'énergie, prédéfinies, on détermine au moins une tension de consigne (U_s) que l'on compare à la tension réelle obtenue (U_ist), le régulateur formant une grandeur de réglage de puissance (P_stell), prise en compte pour la régulation du générateur.

4. Installation de répartition de l'énergie selon les revendications précédentes,
**caractérisée par**
un moyen de détermination de l'état de la batterie (18) et par un moyen de détermination de l'état du générateur, ces moyens étant reliés respectivement au gestionnaire du réseau embarqué.

5. Installation de répartition de l'énergie selon les revendications précédentes,
**caractérisée en ce que**
les informations suivantes ou un nombre prédéfini d'informations suivantes sont exploitées pour déterminer la répartition optimale de l'énergie par le gestionnaire du réseau embarqué :
- demande de puissance (P_f),
- durée de commutation autorisée au cours de laquelle la puissance demandée doit être fournie (t_s),
- état de la batterie (BZ),
- état du générateur (GZ),
- tension réelle du réseau embarqué (U_ist),
- demande de couple par la ligne de transmission au réseau embarqué (M_f),
- cycle de conduite (FZ),
- grandeur de sortie du régulateur (grandeur de réglage) comme indication de puissance (P_stell),
- vitesse de rotation du moteur (n_mot).

6. Installation de répartition de l'énergie selon les revendications précédentes,
**caractérisée en ce que**
l'installation de commande ou le gestionnaire du réseau embarqué fournit les signaux de sortie suivants ou certains de ceux-ci :
- puissance des consommateurs non commandés, par rapport à la tension de consigne (P_nsv_Us),
- demande de vitesse de rotation provenant du réseau embarqué et appliquée à la ligne de transmission avec pour but de modifier la vitesse de rotation du générateur également en tenant compte de la démultiplication de la transmission du générateur (n_s),
- demande de couple du réseau embarqué à la ligne de transmission (M_mot_anf),
- courant d'excitation (I_err),
- vecteur de paramètre de la commande du générateur notamment pour commander les redresseurs impulsionnels du pont redresseur (G_s),
- tension de consigne du réseau embarqué (U_s).

7. Installation de répartition de l'énergie selon les revendications précédentes,
**caractérisée en ce que**
le gestionnaire de réseau embarqué (24) dans lequel est enregistrée la stratégie de la gestion et la commande préalable (23) ainsi que le régulateur (21) sont constitués par des unités distinctes.

8. Installation de répartition de l'énergie selon les revendications précédentes,
**caractérisée en ce que**
le gestionnaire de réseau embarqué (24) fournit des signaux de commande à la commande de générateur (25), ces signaux produisant une variation de puissance réalisée par le générateur et transmettant des signaux à une commande d'utilisateur (26) qui produisent une variation de puissance par une gestion d'utilisateur, et
à la fois la commande de générateur (25) et aussi la commande d'utilisateur (26) fournissent chacun des signaux de commande.

9. Installation de répartition de l'énergie selon la revendication 1,
**caractérisée en ce que**
pour l'exploitation de l'état de charge de la batterie, on tient compte de l'évaluation de la vitesse de rotation future du moteur, et à l'aide de l'exploitation de l'état de la batterie, on intervient sur la gestion de l'énergie.
